# FASCICULE DE BREVET EUROPEEN

(11) **EP 2 821 584 B1**
(45) Date de publication et mention de la délivrance du brevet: **03.02.2016**
(21) Numéro de dépôt: 14175788.0
(22) Date de dépôt: 04.07.2014
(51) Int. Cl.: E06B 9/74, E06B 9/76

(54) **Dispositif de manoeuvre d'un équipement de fermeture ou de protection solaire**
Antriebsvorrichtung für einen Verschluss oder Sonnenschutz
Actuating device for a closure or sun screen

(30) Priorité: 04.07.2013 FR 1356594
(43) Date de publication de la demande: 07.01.2015
(73) Titulaire: Somfy SAS, 74300 Cluses (FR)
(72) Inventeur: Clerget, Sergyl, 74290 Bluffy (FR); Garby, Thierry, 74300 Chatillon Sur Cluses (FR)
(74) Mandataire: Bugnion Genève

(56) Documents cités:
- EP-A1- 2 503 091
- US-A- 5 092 387

## Description

### DOMAINE TECHNIQUE DE L'INVENTION

L'invention se rapporte à l'entraînement manuel d'un équipement domotique, et notamment bien que de manière non exclusive, à un entraînement de secours d'un équipement domotique par ailleurs motorisé.

### ETAT DE LA TECHNIQUE ANTERIEURE

De nombreux équipements domotiques mobiles motorisés, notamment les écrans, stores, et volets roulants de tous types, sont équipés d'un dispositif d'entraînement manuel de secours à manivelle, celle-ci entraînant un étage intermédiaire de démultiplication tel qu'une vis sans fin, destinée à entraîner l'élément mobile de l'équipement domotique en cas de défaillance du moteur. Un exemple d'un tel dispositif est donné par le document FR 2 480 846. Le dispositif comporte d'une part un dispositif d'entraînement motorisé, ou actionneur, à moteur électrique et à carter tubulaire destiné à être logé dans un tube d'enroulement de store, volet ou similaire, et d'autre part un mécanisme actionnable manuellement, susceptible d'entraîner en rotation le carter tubulaire du moteur. L'arbre de sortie de l'actionneur est relié cinématiquement en rotation au tube d'enroulement, un premier dispositif étant prévu pour immobiliser en rotation le carter, de sorte que lorsque le moteur fonctionne, l'arbre de sortie de l'actionneur entraîne en rotation le tube d'enroulement autour du carter. Un second dispositif est prévu pour immobiliser en rotation le tube d'enroulement par rapport au carter tubulaire, de sorte que lorsque le moteur ne fonctionne pas, le tube d'enroulement peut être entraîné manuellement par la rotation du carter tubulaire de l'actionneur sur lui-même. Le mécanisme actionnable manuellement comporte une roue d'entraînement solidaire en rotation du carter tubulaire et concentrique à celui-ci, entraînée par une vis sans fin formée à l'extrémité d'une tige entraînée par une manivelle. La tige et la vis sans fin étant formées d'une pièce, il n'est pas possible de choisir la longueur de la tige en fonction des conditions d'implantation de l'appareillage, voire de l'omettre complètement si dans certaines applications elle n'est pas souhaitée.

La recherche d'une différentiation industrielle retardée entre différentes versions proposées dans une gamme d'équipements conduit à séparer la vis sans fin de la tige, comme proposé par exemple dans le document EP 2 503 091, qui présente une vis sans fin traversée par un trou de section hexagonale permettant l'insertion d'une tige de section complémentaire, dont la position axiale finale est déterminée par une rondelle annulaire. Mais ce montage doit malgré tout être réalisé en usine, car l'intervention nécessite l'ouverture du capot du mécanisme et sort du champ de responsabilité de l'installateur. La tige fait donc partie du mécanisme complet expédié monté par le fabricant. L'encombrement du mécanisme préassemblé se traduit par des coûts d'emballage élevés, et des risques de casse lors du transport et des manutentions.

### EXPOSE DE L'INVENTION

L'invention vise à remédier aux inconvénients de l'état de la technique et notamment à faciliter le montage et réduire les risques de casse d'un tel produit. Il vise notamment à permettre de retarder davantage le montage de la tige.

Pour ce faire est proposé, suivant un premier aspect de l'invention, un dispositif de manoeuvre d'un équipement de fermeture ou de protection solaire, notamment du type store ou volet roulant, le dispositif comportant un boîtier fixe présentant un logement principal, une vis sans fin guidée en rotation dans le logement principal et une tige de manoeuvre pour entraîner en rotation la vis sans fin, la vis sans fin étant traversée par un trou axial, la tige de manoeuvre étant apte à être insérée dans le trou axial en solidarisant en rotation la tige de manoeuvre à la vis sans fin, le dispositif étant pourvu d'une liaison à encliquetage entre une agrafe élastiquement déformable et un épaulement d'appui permettant l'insertion de la tige de manoeuvre dans le trou axial, et bloquant le retrait de la tige de manoeuvre insérée dans le trou axial.

La solution de fixation par encliquetage est particulièrement simple à mettre en oeuvre et permet de confier à l'installateur le montage de la tige dans le trou de la vis sans fin. Le corps du mécanisme et la tige peuvent être emballés et expédiés séparément.

Un même corps de mécanisme, incluant le boîtier et la vis sans fin, peut être associé à une pluralité de tiges de dimensions différentes. L'installateur peut le cas échéant avoir à sa disposition au moment du montage des tiges de longueurs différentes et choisir la mieux adaptée en fonction des conditions rencontrées.

Par ailleurs, la simplicité du montage de la tige dans la vis permet d'envisager de ne monter la tige dans la vis sans fin qu'après avoir monté le boîtier portant la vis sans fin sur l'équipement, voire après fixation de l'ensemble constitué par l'équipement domotique motorisé et le boîtier portant la vis sans fin à son emplacement définitif dans le bâtiment.

Suivant un mode de réalisation préféré, l'agrafe élastique est fixée à la tige de manoeuvre, de préférence à une extrémité libre de la tige de manoeuvre, par exemple par l'intermédiaire d'une vis. L'agrafe élastique est alors visible avant montage, et l'installateur n'a pratiquement pas besoin d'instruction pour comprendre comment mener le montage. De préférence, l'épaulement est formé sur la vis sans fin, cette solution présentant l'avantage de ne pas engendrer de rotation relative entre agrafe élastique et épaulement en cours de fonctionnement. On peut également envisager de prévoir que l'épaulement soit formé directement sur le carter.

Avantageusement, on peut prévoir la vis sans fin présente une extension dans laquelle est logée l'agrafe élastique, ce qui permet de protéger l'agrafe élastique. Cette extension peut avantageusement se trouver à la hauteur d'un des paliers, pour limiter l'encombrement axial.

Suivant un autre mode de réalisation l'agrafe élastique est fixée à la vis sans fin ou au boîtier, l'épaulement étant formé sur la tige de manoeuvre.

Dans tous les modes de réalisation, on a avantage à ce que l'épaulement soit annulaire. De préférence, l'agrafe élastique comprend au moins deux languettes déformables entourant l'axe de rotation.

De préférence, le logement principal est débouchant. On peut ainsi accéder au logement par une ouverture opposée à l'ouverture d'insertion de la tige, par exemple pour une intervention d'entretien sur la vis sans fin ou pour un démontage. Avantageusement, le logement principal est symétrique par rapport à un plan de symétrie, ce qui permet d'envisager avec un même ensemble des montages latéralisés à l'une ou l'autre extrémité de l'équipement de fermeture ou de protection solaire.

Suivant un autre aspect de l'invention, celle-ci a trait à équipement de fermeture ou de protection solaire, comportant un tube d'enroulement d'un écran, une roue dentée, une chaîne cinématique de transmission entre la roue dentée et le tube d'enroulement, et un dispositif de manoeuvre tel que présenté précédemment, la roue dentée engrenant avec la vis sans fin du dispositif de manoeuvre. L'équipement peut être motorisé ou non.

Suivant un autre aspect de l'invention, celle-ci a trait à un appareillage pour l'entraînement d'un équipement de fermeture ou de protection solaire, comportant un moteur électrique comportant un carter et un rotor tournant autour d'un axe géométrique principal, une roue dentée tournant autour de l'axe géométrique principal et une chaîne cinématique de transmission entre la roue dentée et le rotor, ainsi qu'un dispositif de manoeuvre tel que décrit précédemment, la roue dentée engrenant avec la vis sans fin du dispositif de manoeuvre.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un équipement de fermeture ou de protection solaire selon un aspect de l'invention ;
- la figure 2, une vue en coupe d'un dispositif de manoeuvre de l'équipement de la figure 1.
- la figure 3, une vue isométrique d'une agrafe élastique du dispositif de manoeuvre de la figure 2,
- la figure 4, une vue éclatée d'une partie du dispositif de manoeuvre de la figure 2,
- la figure 5, une vue schématique d'un équipement de fermeture ou de protection solaire selon un autre mode de réalisation de l'invention.

Pour plus de clarté, les éléments identiques seront repérés par des signes de référence identiques sur l'ensemble des figures.

### DESCRIPTION DÉTAILLÉE DE MODES DE REALISATION

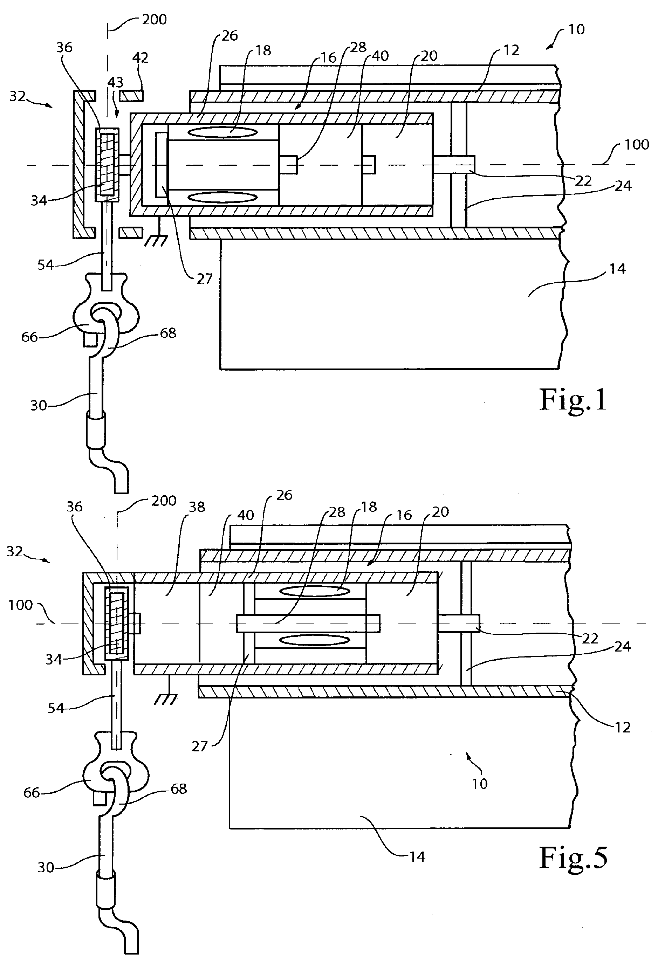

Sur la figure **1** est schématiquement illustré un équipement domotique **10** comportant un tube d'enroulement **12** pour un écran d'occultation ou de projection ou un volet roulant **14**, tournant autour d'un axe de référence **100** et à l'intérieur duquel est partiellement inséré un dispositif d'entraînement motorisé **16** ou actionneur, comportant un moteur électrique **18** accouplé à un réducteur de vitesse **20**, par exemple irréversible, dont l'arbre de sortie **22** est accouplé au tube d'enroulement **12** par l'intermédiaire d'une roue d'entraînement **24**. Le moteur **18** et le réducteur de vitesse **20** sont logés à l'intérieur d'un carter tubulaire commun **26** fixe et coaxial avec le tube d'enroulement **12**. Une unité de commande **27**, positionnée de préférence en tête du moteur **18**, dans le carter **26** de l'actionneur, gère notamment la commande du moteur, l'alimentation, le comptage de position.

L'actionneur peut comprendre également un frein **40** inséré sur la chaîne cinématique entre le rotor **28** du moteur et l'arbre de sortie. Ce frein peut être un frein électromagnétique, par exemple un frein à plateau à appel magnétique, ou un frein mécanique. À l'arrêt du moteur, le frein est actif et immobilise en rotation le tube d'enroulement **12** par rapport au carter tubulaire **26**.

À l'extrémité opposée à l'arbre de sortie **22**, l'actionneur comprend un premier dispositif de montage sur une structure fixe, immobilisant en rotation le carter **26** de l'actionneur, notamment lorsque le mécanisme actionnable manuellement n'est pas sollicité. Le carter tubulaire **26** est monté avec possibilité de rotation sur le premier dispositif, de sorte que lorsque le mécanisme actionnable manuellement est sollicité, le carter est entraîné en rotation, entraînant par là-même le tube d'enroulement **12** en rotation.

Le carter tubulaire **26** est en effet relié à une manivelle **30** par l'intermédiaire d'un dispositif de manoeuvre de secours **32** comportant une vis sans fin **34** engrenant avec une roue dentée **36** liée au carter.

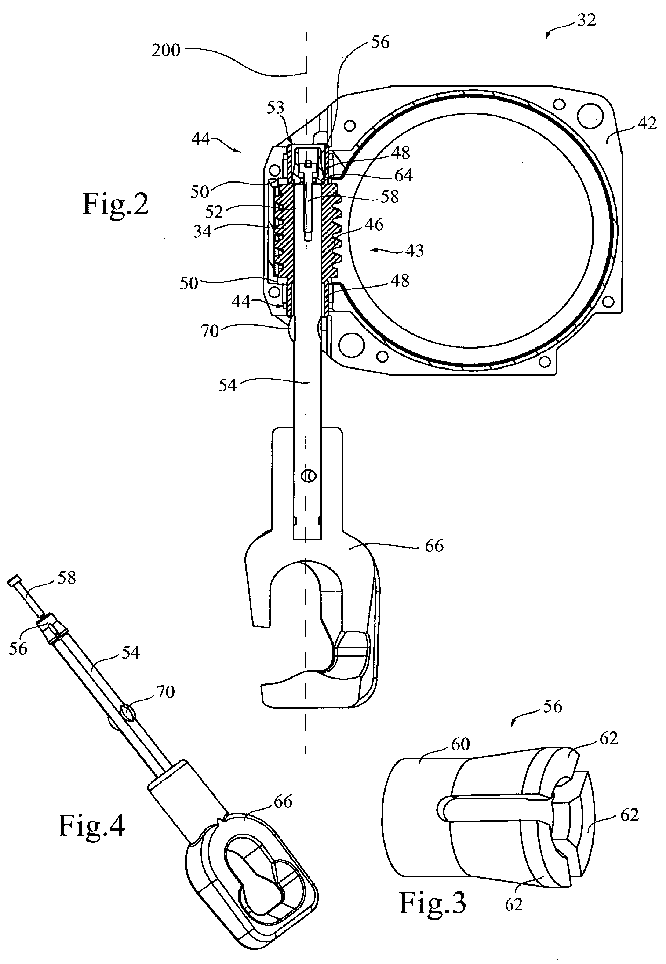

Le dispositif de manoeuvre de secours **32**, illustré en détail sur les figures **2** à **4**, comporte un boîtier **42** muni d'un logement principal **43** dans lequel la vis sans fin **34** est guidée en rotation par deux paliers lisses **44** alignés définissant un axe de rotation **200** transversal (ici, perpendiculaire) à l'axe **100** de rotation de la roue dentée **36**. La vis sans fin **34** comporte un filet d'entraînement **46** et, axialement de part et d'autre du filet, deux portées cylindriques lisses **48** venant tourillonner dans les paliers lisses **44** de façon à guider la vis sans fin **34** en rotation autour de l'axe de rotation **200**. Le logement principal **43** présente des épaulements **50** empêchant tout mouvement axial de la vis sans fin.

La vis sans fin **34** est traversée par un trou axial **52** à section non circulaire, préférentiellement polygonale, par exemple hexagonale, prolongé par une extension cylindrique **53** creuse de section plus importante que le trou axial **52** et coïncidant avec l'une des portées cylindriques lisses **48**. Le dispositif d'entraînement manuel **32** est complété par une tige d'entraînement **54** qui présente une section également polygonale correspondante et des dimensions permettant son insertion dans le trou axial **52** pour solidariser en rotation la tige **54** à la vis sans fin **34**. Un embout formant une agrafe **56** élastiquement déformable est fixé à l'extrémité libre de la tige **52** à l'aide d'une vis **58**. L'agrafe élastique **56**, illustrée sur la figure **3**, présente une base cylindrique **60** et trois languettes élastiques **62** à la périphérie de la base et la prolongeant axialement en s'évasant progressivement. Lors de l'insertion de la tige **54** dans le trou **52** de la vis sans fin **34**, les languettes **62** de l'agrafe élastique **56** s'effacent en se déformant élastiquement jusqu'à ce que la tige **54** atteigne sa position finale illustrée sur la figure **2**, dans laquelle l'agrafe élastique **56** se trouve logée dans l'extension cylindrique **53**. L'agrafe élastique **56** retrouve alors élastiquement sa forme non contrainte et vient en appui contre un épaulement annulaire **64** formé à la jonction entre l'extension cylindrique **53** et le trou axial **52**, bloquant le retrait de la tige **54** insérée dans le trou axial **52**. Le logement principal **43** ainsi que l'extension cylindrique **53** de la vis sans fin sont de préférence ouverts et accessibles depuis l'extérieur, par exemple au travers d'une ouverture du boîtier **32**, pour rendre possibles l'accès à la vis **58** et le démontage de l'agrafe élastique **56** et de la tige **54**. À son extrémité opposée, la tige **54** est pourvue d'un anneau **66** dans lequel vient s'insérer un crochet **68** de la manivelle **30**. Un ou plusieurs éléments de butée **70** peuvent être formés sur la tige, ceux-ci étant en contact avec le boîtier **42** ou la vis sans fin **34** lorsque la tige a atteint sa position finale.

De préférence, le logement principal **43** de réception de la vis sans fin, ainsi que la vis sans fin elle-même sont symétriques, de sorte que la tige puisse être insérée par l'une ou l'autre des extrémités du logement **43**, en fonction des configurations de montage du dispositif d'entraînement motorisé **16** et que l'agrafe élastique puisse être retenue, quel que soit le sens de montage.

Alternativement, l'agrafe élastique peut être reçue lors du montage dans un logement secondaire du boîtier, remplissant les mêmes fonctions que l'extension axiale de la vis sans fin. On peut alors imaginer que ce soit la tige elle-même qui soit montée guidée dans les paliers lisses et non la vis sans fin.

Le mode de fixation de la tige de manoeuvre **54** à la vis sans fin **34** est extrêmement simple et fiable, ce qui rend possible la livraison du dispositif de manoeuvre **32** en deux lots, l'un composé du boîtier **42** et de la vis sans fin **34**, monté ou prêt à monter sur le carter principal **26**, et l'autre composé de la tige de manoeuvre **54**, de l'agrafe élastique **56** et de la vis **58**, en pièces détachées ou préassemblées. Il suffit alors à l'installateur pour finaliser le montage, d'insérer la tige de manoeuvre **54** équipée de l'agrafe élastique **56** dans le trou **52** de la vis sans fin **34** jusqu'à atteindre la position axiale finale, avant ou de préférence après montage du boîtier **42** sur le carter principal **26**.

Naturellement, de nombreuses variantes sont possibles. Il est ainsi possible de prévoir que l'agrafe élastique vienne en appui contre un épaulement formé sur le boîtier. Il est également possible de prévoir une agrafe élastique formée sur la vis sans fin ou sur le boîtier, et un épaulement étant formé sur la tige. Par ailleurs, le même type de fixation par agrafe élastique entre la tige et la vis sans fin est envisageable pour un équipement non motorisé.

La chaîne cinématique de transmission depuis la roue dentée jusqu'au rotor **28** ou jusqu'à l'arbre de sortie **22** peut être de tout type connu.

Selon un mode de réalisation alternatif illustré sur la figure **5**, le dispositif de manoeuvre de secours entraîne en rotation non pas le carter tubulaire **26**, mais le rotor **28** du moteur lorsque la manivelle **30** est actionnée manuellement. Dans ce cas, la roue dentée **36** engrenant avec la vis sans fin **34** est reliée à un accouplement bidirectionnel **38**, lui-même relié à un embrayage électromagnétique **40**. L'accouplement bidirectionnel **38** peut être un accouplement à roue libre et a pour fonction pour transmettre à un organe tournant intermédiaire tout couple moteur exercé par la vis sans fin **34** et pour solidariser l'organe tournant intermédiaire au boîtier **42** en l'absence de couple moteur exercé par la vis sans fin **34**. L'embrayage électromagnétique **40** a pour fonction de séparer l'organe tournant intermédiaire et l'accouplement bidirectionnel **38** du rotor **28** du moteur lorsque ce dernier fonctionne, et d'accoupler l'organe tournant intermédiaire et l'accouplement bidirectionnel **38** au rotor **28** du moteur **18** lorsque ce dernier n'est pas alimenté électriquement. L'embrayage électromagnétique **40** peut également avoir une fonction de limitation de couple, pour éviter qu'un couple trop élevé appliqué avec la manivelle **30** ne soit transmis intégralement au réducteur de vitesse **20** au risque d'endommager ce dernier.

## Revendications

1. Dispositif de manoeuvre (32) d'un équipement de fermeture ou de protection solaire (10), notamment du type store ou volet roulant, le dispositif comportant un boîtier fixe (42) présentant un logement principal (43), une vis sans fin (34) guidée en rotation dans le logement principal (43) et une tige de manoeuvre (54) pour entraîner en rotation la vis sans fin (34), la vis sans fin (34) étant traversée par un trou axial (52), la tige de manoeuvre (54) étant apte à être insérée dans le trou axial (52) en solidarisant en rotation la tige de manoeuvre (54) à la vis sans fin (34), **caractérisé en ce que** le dispositif est pourvu d'une liaison à encliquetage entre une agrafe élastiquement déformable (56) et un épaulement d'appui (64) permettant l'insertion de la tige de manoeuvre (54) dans le trou axial (52), et bloquant le retrait de la tige de manoeuvre (54) insérée dans le trou axial (52).

2. Dispositif selon la revendication 1, **caractérisé en ce que** l'agrafe élastique (56) est fixée à la tige de manoeuvre (54), de préférence à une extrémité libre de la tige de manoeuvre (54).

3. Dispositif selon la revendication 2, **caractérisé en ce que** l'épaulement (64) est formé sur la vis sans fin (34).

4. Dispositif selon l'une quelconque des revendications 2 à 3, **caractérisé en ce que** la vis sans fin (34) présente une extension (53) dans laquelle est logée l'agrafe élastique (56).

5. Dispositif selon la revendication 1, **caractérisé en ce que** l'agrafe élastique (56) est fixée à la vis sans fin (34) ou au boîtier (42), l'épaulement étant formé sur la tige de manoeuvre (54).

6. Dispositif selon l'une quelconque des revendications précédentes, **caractérisé en ce que** l'épaulement (64) est annulaire.

7. Dispositif selon l'une quelconque des revendications précédentes, **caractérisé en ce que** l'agrafe élastique (56) comprend au moins deux languettes déformables (62) entourant l'axe de rotation (200).

8. Dispositif selon l'une quelconque des revendications précédentes, **caractérisé en ce que** le logement principal (53) est débouchant.

9. Équipement de fermeture ou de protection solaire (10), comportant un tube d'enroulement (12) d'un écran (14), une roue dentée (36), une chaîne cinématique de transmission entre la roue dentée (36) et le tube d'enroulement (12), **caractérisé en ce qu'**il comporte en outre un dispositif de manoeuvre (32) selon l'une quelconque des revendications précédentes, la roue dentée (36) engrenant avec la vis sans fin (34) du dispositif de manoeuvre (32).

10. Appareillage pour l'entraînement d'un équipement de fermeture ou de protection solaire, comportant un moteur électrique (18) comportant un carter (26) et un rotor (28) tournant autour d'un axe géométrique principal (100), une roue dentée (36) tournant autour de l'axe géométrique principal (100) et une chaîne cinématique de transmission entre la roue dentée (36) et le rotor (28), **caractérisé en ce qu'**il comporte en outre un dispositif de manoeuvre (32) selon l'une quelconque des revendications précédentes, la roue dentée (36) engrenant avec la vis sans fin (34) du dispositif de manoeuvre (32).

## Patentansprüche

1. Antriebsvorrichtung (32) einer Verschluss- oder Sonnenschutzvorrichtung (10), insbesondere vom Typ Vorhang oder Rollladen, wobei die Vorrichtung ein ortfestes Gehäuse (42), das eine Hauptaufnahme (43) aufweist, eine in Rotation in der Hauptaufnahme (43) geführte Schnecke (34) und eine Antriebsstange (54), um die Schnecke (34) rotierend anzutreiben, aufweist, wobei die Schnecke (34) von einem axialen Loch (52) durchquert ist, wobei die Antriebsstange (54) in das axiale Loch (52) einsetzbar ist und dabei die Antriebsstange (54) mit der Schnecke (34) in Rotation verbunden ist, **dadurch gekennzeichnet, dass** die Vorrichtung mit einer Rastverbindung zwischen einer elastisch verformbaren Klemme (56) und einem Stützabsatz (64) ausgestattet ist, wodurch das Einsetzen der Antriebsstange (54) in das axiale Loch (52) ermöglicht und das Herausziehen der in das axiale Loch (52) eingesetzten Antriebsstange (54) blockiert ist.

2. Vorrichtung nach Anspruch 1, **dadurch gekennzeichnet, dass** die elastische Klemme (56) an der Antriebsstange (54), vorzugsweise an einem freien Ende der Antriebsstange (54), befestigt ist.

3. Vorrichtung nach Anspruch 2, **dadurch gekennzeichnet, dass** der Absatz (64) auf der Schnecke (34) ausgebildet ist.

4. Vorrichtung nach einem der Ansprüche 2 bis 3, **dadurch gekennzeichnet, dass** die Schnecke (34) eine Erweiterung (53) aufweist, in der die elastische Klemme (56) aufgenommen ist.

5. Vorrichtung nach Anspruch 1, **dadurch gekennzeichnet, dass** die elastische Klemme (56) an der Schnecke (34) oder am Gehäuse (42) befestigt ist, wobei der Absatz auf der Antriebsstange (54) ausgebildet ist.

6. Vorrichtung nach einem der vorangehenden Ansprüche, **dadurch gekennzeichnet, dass** der Absatz (64) ringförmig ist.

7. Vorrichtung nach einem der vorangehenden Ansprüche, **dadurch gekennzeichnet, dass** die elastische Klemme (56) mindestens zwei verformbare Zungen (62) umfasst, die die Rotationsachse (200) umgeben.

8. Vorrichtung nach einem der vorangehenden Ansprüche, **dadurch gekennzeichnet, dass** die Hauptaufnahme (53) ausmündend ist.

9. Verschluss- oder Sonnenschutzvorrichtung (10), die ein Rollrohr (12) eines Vorhangs (14), ein Zahnrad (36), eine kinematische Übertragungskette zwischen dem Zahnrad (36) und dem Rollrohr (12) aufweist, **dadurch gekennzeichnet, dass** sie ferner eine Antriebsvorrichtung (32) nach einem der vorangehenden Ansprüche aufweist, wobei das Zahnrad (36) mit der Schnecke (34) der Antriebsvorrichtung (32) eingreift.

10. Apparatur für den Antrieb einer Verschluss- oder Sonnenschutzvorrichtung, die einen Elektromotor (18) aufweist, der einen Kasten (26) und einen Rotor (28), der um eine geometrische Hauptachse (100) dreht, ein Zahnrad (36), das um die geometrische Hauptachse (100) dreht und eine kinematische Übertragungskette zwischen dem Zahnrad (36) und dem Rotor (28) aufweist, **dadurch gekennzeichnet, dass** sie ferner eine Antriebsvorrichtung (32) nach einem der vorangehenden Ansprüche aufweist, wobei das Zahnrad (36) mit der Schnecke (34) der Antriebsvorrichtung (32) eingreift.

## Claims

1. A device (32) for manually actuating a piece of closing or sun protection equipment (10), in particular of the blinds or rolling shutters type, the device including a stationary case (42) having a main housing (43), a worm (34) guided in rotation in the main housing (43) and a driving rod (54) to rotate the worm (34), the worm (34) being passed through by an axial hole (52), the driving rod (54) being able to be inserted in the axial hole (52) by securing the driving rod (54) in rotation with the worm (34), **characterized in that** the device is provided with a snapping connection between an elastically deformable staple (56) and a bearing shoulder (64) allowing the insertion of the driving rod (54) into the axial hole (52), and blocking the removal of the driving rod (54) inserted into the axial hole (52).

2. The device according to claim 1, **characterized in that** the elastic staple (56) is fastened to the driving rod (54), preferably at one free end of the driving rod (54).

3. The device according to claim 2, **characterized in that** the shoulder (64) is formed on the worm (34).

4. The device according to any one of claims 2 to 3, **characterized in that** the worm (34) has an extension (53) in which the elastic staple (56) is housed.

5. The device according to claim 1, **characterized in that** the elastic staple (56) is fastened to the worm (34) or the case (42), the shoulder being formed on the driving rod (54).

6. The device according to any one of the preceding claims, **characterized in that** the shoulder (64) is annular.

7. The device according to any one of the preceding claims, **characterized in that** the elastic staple (56) comprises at least two deformable tongues (62) surrounding the axis of rotation (200).

8. The device according to any one of the preceding claims, **characterized in that** the main housing (53) is a through housing.

9. A closing or sun protection equipment (10), including a winding tube (12) for a screen (14), a toothed wheel (36), a drive train between the toothed wheel (36) and the winding tube (12), **characterized in that** it further includes a manual actuating device (32) according to any one of the preceding claims, the toothed wheel (36) meshing with the worm (34) of the manual actuating device (32).

10. An apparatus for driving a piece of closing or sun protection equipment, including an electric motor (18) including a casing (26) and a rotor (28) rotating around a main geometric axis (100), a toothed wheel (36) rotating around the main geometric axis (100) and a drive train between the toothed wheel (36) and the rotor (28), **characterized in that** it further includes a manual actuating device (32) according to any one of the preceding claims, the toothed wheel (36) meshing with the worm (34) of the manual actuating device (32).
